# EUROPÄISCHE PATENTSCHRIFT

(11) **EP 1 657 088 B1**
(45) Veröffentlichungstag und Bekanntmachung des Hinweises auf die Patenterteilung: **30.03.2016**
(21) Anmeldenummer: 05023066.3
(22) Anmeldetag: 21.10.2005
(51) Int. Cl.: B60H 1/00, F28D 20/00

(54) **Wärmeübertrager mit Kältespeicher**
Air conditioning device with cold accumulator
Appareil de climatisation avec accumulateur de froid

(30) Priorität: 19.08.2005 DE 102005039589; 29.10.2004 DE 102004052979
(43) Veröffentlichungstag der Anmeldung: 17.05.2006
(60) Teilanmeldung: 10182104.9
(73) Patentinhaber: MAHLE Behr GmbH & Co. KG, 70469 Stuttgart (DE)
(72) Erfinder: Kohl, Michael, Dipl.-Ing., 74321 Bietigheim (DE); Manski, Ralf, Dipl.-Ing., 70197 Stuttgart (DE); Strauss, Thomas, Dipl.-Ing., 73274 Notzingen (DE); Walter, Christoph, Dipl.-Ing., 70469 Stuttgart (DE)
(74) Vertreter: Grauel, Andreas

(56) Entgegenhaltungen:
- DE-A1- 10 140 630
- DE-A1- 19 948 943
- DE-C1- 19 851 402
- FR-A- 2 851 503
- US-A1- 2002 088 246
- US-A1- 2004 104 020
- US-B1- 6 260 376

## Beschreibung

Die Erfindung betrifft einen Wärmeübertrager, insbesondere für eine Kraftfahrzeug-Klimaanlage, mit Kältespeicher gemäß dem Oberbegriff des Anspruches 1. Solch ein Würmeübertrager ist aus der Figur 12 von US 2002/0088246A1 bekannt.

Es ist ein Ziel der Kraftfahrzeughersteller, den Kraftstoffverbrauch des Fahrzeugs zu reduzieren. Eine Maßnahme zur Reduzierung des Kraftstoffverbrauchs ist das Abschalten des Motors bei vorübergehendem Stillstand, beispielsweise beim Halten an einer Ampel. Dieses vorübergehende Abschalten des Motors wird auch Idle-stop-Betrieb genannt Diese Maßnahme wird bei heutigen verbrauchsarmen Fahrzeugen, wie beispielsweise bei dem sogenannten Dreiliter-Fahrzeug, bereits eingesetzt. Bei Fahrzeugen, die über den Idie-stop-Betriebsmodus verfügen, ist im innerstädtischen Verkehr ca. 25-30 % der Fahrzeit der Motor ausgeschaltet.

Dies ist ein Grund, warum derartige Fahrzeuge oftmals nicht mit einer Klimaanlage ausgerüstet sind, denn bei Motorstillstand kann auch ein für eine Klimaanlage notwendiger Kompressor nicht angetrieben werden, so dass im Idle-stop-Betrieb eine Klimaanlage die notwendige Kätteleistung nicht bereitstellen kann. Zum Teil wird das Problem auch dadurch gelöst, dass bei eingeschalteter Klimaanlage der Motor bei einem Stopp weiterläuft, wodurch jedoch ein höherer Kraftstoffverbrauch resultiert

In der DE 101 56 944 A1 ist eine Klimaanlage für ein Kraftfahrzeug mit in einem Kältemittelkreis angeordnetem Kompressor und Verdampfer zum Abkühlen von zu konditionierender Luft für den Innenraum offenbart, welche einen zweiten Verdampfer zum Abkühlen der Luft aufweist, der zusätzlich ein Kältespeichermedium enthält, wobei die zu konditionierende Luft wahlweise durch jeden Verdampfer einzeln oder durch beide Verdampfer gemeinsam leitbar ist. Gemäß einer alternativen Ausführungsform ist an Stelle des zweiten Verdampfers der Verdampfer derart ausgebildet, dass er zwei Teilbereiche aufweist, und in einem der beiden Teilbereiche ein Kältespeichermedium enthält, wobei die zu konditionierende Luft wahlweise durch jeden Verdampfer einzeln oder durch beide Verdampfer gemeinsam leitbar ist. Dabei können die Rohre, in welchen das Kältemittel durch den Verdampfer strömt, als Mehrkanalrohre ausgebildet sein, wobei einer oder mehrere der Kanäle mit dem Kältespeichermedium gefüllt sind. Das Befüllen ist jedoch relativ aufwändig, so dass entsprechende Verdampfer noch Wünsche offen lassen.

Ausgehend von diesem Stand der Technik ist es Aufgabe der Erfindung, einen verbesserten Wärmeübertrager zur Verfügung zu stellen. Diese Aufgabe wird gelöst durch einen Wärmeübertrager mit den Merkmalen des Anspruchs 1. Vorteilhafte Ausgestaltungen sind Gegenstand der Unteransprüche.

Erfindungsgemäß ist ein Wärmeübertrager, insbesondere ein Verdampfer für eine Kraftfahrzeug-Klimaanlage zum Abkühlen von zu konditionierender Luft für den Innenraum vorgesehen, mit einer Mehrzahl nebeneinanderliegend angeordneter, kältennittelführender Rohre und mit wenigstens einem Kältespeicher, in weichem ein Kältespeichermedium vorgesehen ist, wobei mindestens ein Kältespeicherelement, welches Teil des Kältespeichers ist, ein käftemittelführendes Rohr auf mindestens drei Seiten umgibt. Dabei kann das kältemittelführende Rohr auch vollständig innerhalb des Kältespeicherelements angeordnet sein. Die Anordnung zumindest eines Teilbereichs des kältemittelführenden Rohres in einem Kältespeicherelement ergibt einen sehr guten Wärmeübergang, so dass das Kältespeichermedium schnell einen Phasenwechsel durchlaufen kann. Der Wärmeübertrager kann hierbei auch mehrteilig ausgebildet sein, wobei zwischen den einzelnen Bereichen des Wärmeübertragers auch Regelorgane, bspw ein Expansionsventil, angeordnet sein können. Hierbei kann das Kältespeicherelement auch einen Bereich, beispielsweise einen Verbindungsbereich oder einen oder mehrere Verbindungsstege aufweisen, in welchem kein Kältespeichermedium angeordnet ist, und der zwischen zwei oder mehr mit dem Kältespeichermedium gefüllten Bereichen angeordnet ist. Der Bereich kann vorzugsweise flächig am kältemittelführenden Rohr, insbesondere von dessen schmaler Stimfläche, anliegen, jedoch kann er auch zumindest bereichsweise beabstandet vom kältemittelführenden Rohrangeordnet sein.

Bei einer Anordnung des kältemittelführenden Rohres im Kältespeicherelement kann es in das mit dem Kältespeichermedium befüllte Kältespeicherelement eingesteckt sein oder aber direkt hierin ausgebildet sein, wobei insbesondere eine Rohr-in-Rohr-Anordnung vorgesehen ist.

Das Kältespeicherelement wird durch ein Rohr mit U-förmigem Querschnitt gebildet, insbesondere mit mehreren Kammern. Hierbei entsprechen bevorzugt die Innenabmessungen des Kältespeicherelements den Außenabmessungen des kältemittelführenden Rohres im entsprechenden Bereich, so dass die Rohre flächig aneinander anliegen. Auch eine einstückige Ausgestaltung, bspw. gebildet durch ein entsprechend extrudiertes Rohr mit mindestens zwei Kanälen, ist möglich.

Das das Kältespeichermedium enthaltende Rohr greift das kältemittelführende Rohr auch nicht vollständig um. Dabei sind vorzugsweise genau drei Seiten des kältemittelführenden Rohres vom das Kältespeichermedium enthaltenden Rohr umgeben. Das das Kältespeichermedium enthaltende Rohr ist dabei mit einem U-förmigen Querschnitt ausgebildet und das kältemittelführende Rohr, wobei es sich vorzugsweise um ein Flachrohr handelt, teilweise, d.h. über einen Teil seines Umfangs, umgeben, wobei bevorzugt der größte Teil des kältemittelführenden Rohres im Inneren des das Kältespeichermedium enthaltenden Rohres angeordnet ist.

Das käftemittefführende Rohr beziehungsweise die kältemittelführenden Kanäle des Rohres enden bevorzugt in einem Sammler. Dabei kann sowohl ein getrennt ausgebildeter Wärmetauscher mit Kältespeicher neben einem herkömmlichen Wärmetauscher angeordnet sein, wobei auch zwei Expansionsorgane vorgesehen sein können, als auch der Kältespeicher direkt in den Wärmetauscher integriert sein.

Die kältespeichermediumführenden Rohre beziehungsweise Kanäle enden bevorzugt in einem getrennt vom Sammler ausgebildeten Kältespeichermedium-Sammelbehälter. Dies ermöglicht eine gemeinsame Befüllung der einzelnen Kältespeicherelemente mit dem Kältespeichermedium, so dass eine einfache und schnelle Befüllung der kältespeichermediumfahrenden Rohre beziehungsweise Kanäle möglich ist. Ferner kann die Montage durch die bevorzugt einstückige Ausgestaltung des Kältespeichers im Falle einer getrennten Ausbildung der kättemitteHührenden Rohre und der Kältespeicherelemente vereinfacht werden. Auch kann dadurch ein Ausgleichsraum für insbesondere temperaturbedingte Volumenänderungen des Kältemittels zur Verfügung gestellt werden.

Bevorzugt fluchten Flachrohrreihen des Verdampfers und die Kältespeicherelemente miteinander, so dass der Luftströmungswiderstand möglichst gering ist, jedoch können die Flachrohrreihen auch versetzt angeordnet sein, oder die Kältespeicherelemente mit den hierin angeordneten kältemittelführenden Rohren können gegenüber den anderen Flachrohren des Verdampfers verdreht angeordnet sein. Eine mehrflutige Ausgestaltung der Rohre, in welchen die Kältespeicherelemente integriert sind, d.h. mehrere Reihen mit kältespeichermediumgefüllten Rohren, ist ebenfalls möglich, wie deren Umlenkungen in der Breite und/oder Tiefe.

Der integrierte Kältespeicher ist bevorzugt in normaler Luftströmungsrichtung gesehen nach dem Verdampfer, insbesondere direkt in Anschluss an den Verdampfer, angeordnet, aber es ist ebenfalls eine Anordnung vor dem Verdampfer oder in den Verdampfer integriert, insbesondere bei einem zweireihigen Verdampfer zwischen den beiden Flachrohrreihen, oder beabstandet vom Verdampfer möglich in einem zweiten, insbesondere kleineren Verdampferteil. Insbesondere im Falle einer beabstandeten Anordnung vom (Haupt-)Verdampfer kann die Größe des Sammlers mit Kältespeicher entsprechend dem vorhandenen Bauraum und/oder den Erfordernissen angepasst werden. Besonders vorteilhaft ist, dass der bestehende Verdampfer nicht abgeändert werden muss, so dass eine relativ einfache Integration des Kältespeichers in bestehende Systeme möglich ist.

Der Kältespeicher besteht bevorzugt aus Aluminium, insbesondere innen und/oder außen beschichtetem Aluminium (wobei unter Aluminium auch eine Aluminiumlegierung zu verstehen ist), gegebenenfalls auch Kupfer, einer Kupfer-Zink-Legierung, Kunstharz oder Kunststoff. Ein Aluminium-Behälter hat den Vorteil, dass er sich mit den übrigen Teilen des Verdampfers problemlos verlöten lässt Dabei handelt es sich bevorzugt um ein stranggepresstes Flachrohr, das eine Mehrzahl von Kanälen aufweist, wobei ein Teil der Kanäle das Kältespeichermedium und der andere Teil der Kanäle das Kältemittel enthalten. Die Ausgestaltung kann jedoch auch mehrteilig sein.

Beim Speichermedium handelt es sich bevorzugt um ein PCM-Material (phase change material), das bevorzugt kongruent schmelzende Medien, insbesondere Decanol, Tetra-, Penta- oder Hexadecan, LiCIO₃3H₂O, wässrige Salzlösungen oder organische Hydrate enthält oder hieraus gebildet ist. Im Speichermedium können auch Keimbildner vorgesehen sein, welche die Kristallbüdung beschleunigen.

Die Phasenumwandlungstemperatur des Speichermediums liegt vorzugsweise in einem Bereich von 0°C bis 30°C, bevorzugt von 1°C bis 20°C, insbesondere von 2°C bis 15°C, insbesondere bevorzugt von 4°C bis 12°C.

Im Inneren des Kältespeicherelements können - unabhängig ob es das kältemittelführende Rohr ganz oder nur teilweise umgibt - Einlagen, wie Rippenbleche, vorzugsweise aus Aluminium, jedoch sind auch andere Metalle oder Kunststoffe geeignet, oder andere Turbulenzeinlagen, wie Vliese oder Gestricke, bspw. aus Kunststoff oder Metall, oder Schäume, bspw. Metallschäume oder Kunststoffschäume, vorgesehen sein. Die Einlagen dienen zur Verbesserung des Wärmetransports sowie zur Erhöhung der inneren Oberfläche um die Kristallbildung des Latentmediums zu beschleunigen.

Im Kältemittel-Kreislauf können zwei Expansionsorgane, insbesondere bevorzugt thermostatische Expansionsventile, vorgesehen sein. Hierbei ist eines der Expansionsorgane einem ersten Verdampferteil und das andere Expansionsorgan dem Kältemittelstrom des eines zweiten Verdampferteils zugeordnet, welcher mit dem Kältespeicher in Verbindung steht, so dass im Normalbetrieb fast der gesamte Kältemittelmassenstrom dem ersten Verdampferteil zur Verfügung steht und der Kältemittelmassenstrom entlang dem zweiten Verdampferteil mit dem Kältespeicher minimal ist. Im Idle-stop-Betrieb ist jedoch eine ausreichende Kältemittelversorgung des Kältespeichers gewährleistet.

Andere Regelungen sind ebenfalls möglich, insbesondere bevorzugt kann auch eine serielle Durchströmung der Verdampferteile vorgesehen sein, so dass nur ein Expansionsorgan für beide Verdampferteile vorgesehen ist. Hierbei ist der Kältemittelaustritt bevorzugt am Sammler des Verdampferbereichs, in welchem der Kältespeicher angeordnet ist, vorgesehen.

Je nach Erfordernis können die beiden Verdampferteile - sofern ein mehrteiliger Aufbau vorgesehen ist - als einteiliger Verdampfer oder als voneinander getrennte Verdampfer aufgebaut und angeordnet sein.

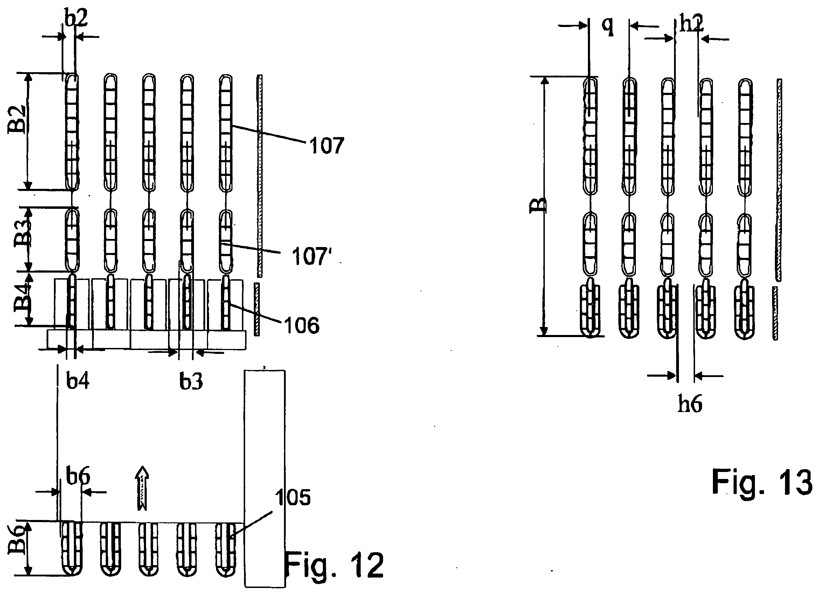

Bevorzugt hat der Wärmetauscher folgende Abmessungen (bezüglich der Maße wird auf die Figuren 12, 13 und 17 verwiesen):
Die Gesamttiefe B des Wärmetauschers beträgt bevorzugt 20 bis 90 mm, insbesondere 30 bis 80 mm, besonders bevorzugt 60 +/- 10 mm.

Die Breite B2 der Flachrohre der ersten Flachrohrreihe beträgt vorzugsweise etwa der Summe der Breiten B3 und B4 der Flachrohre der zweiten Flachrohrreihe und somit vorzugsweise maximal 0,5 x Gesamttiefe B des Wärmetauschers. Die Breite B2 kann jedoch gemäß einer alternativen Ausführungsform, bei der möglichst viele gleiche Bauteile verwendet werden, auch gleich der Breite B3 sein, so dass die gleichen Flachrohre für die erste Flachrohrreihe und den dickeren Bereich der zweiten Flachrohmeihe verwendet werden können.

Die Dicke b2 der Flachrohre der ersten Flachrohrreihe beträgt vorzugsweise 1,2 bis 3,5 mm, insbesondere 2,0 +/- 0,5 mm.

Die Dicke b3 der Flachrohre der zweiten Flachrohrreihe entspricht vorzugsweise der Dicke b2 der Flachrohre der ersten Flachrohrreihe, also vorzugsweise 1,2 bis 3,5 mm, insbesondere 2,0 +/- 0,5 mm.

Die Breite B4 der dünneren Flachrohre der zweiten Flachrohrreihe bzw. des dünneren Bereichs derselben entspricht vorzugsweise der Breite B3 der dickeren Flachrohre der zweiten Flachrohrreihe bzw. der Breite des dickeren Bereichs der zweiten Flachrohrreihe.

Die Dicke b4 der dünneren Flachrohre der zweiten Flachrohrreihe bzw. des dünneren Bereichs der zweiten Flachrohrreihe ist vorzugsweise kleiner als die Dicke b3 der dickeren Flachrohre der zweiten Flachrohrreihe bzw. des dickeren Bereichs der zweiten Flachrohrreihe. Sie beträgt vorzugsweise 0,8 bis 2,5 mm, insbesondere 1,2 bis 2,0 mm.

Die Breite B6 der Kältespeicherelemente beträgt vorzugsweise 5 bis 40 mm, wobei sie insbesondere bevorzugt etwa der Breite B4 entspricht, so dass die dünneren Flachrohre der zweiten Flachrohrreihe bzw. der dünnere Bereich derselben möglichst weit im Inneren der U-förmigen Kältespeicherelemente aufgenommen werden kann, wodurch sich eine große Wärmeubertragungsfläche ergibt, die eine schnelle Beladung und ebenso bei Bedarf eine gute Wärmeaufnahme ergibt.

Die Dicke b6 der Kältespeicherelemente entspricht vorzugsweise der Dicke b3, kann jedoch auch größer sei, so dass die Kältespeicherelemente und die dünneren Flachrohre der zweiten Flachrohrreihe bzw. deren dünnerer Bereich ausreichend viel Kältespeichermedium aufnehmen bzw. von ausreichend viel Kältemittel durchströmt werden. Die Abmessungen betragen vorzugsweise 2,5 bis 8,0 mm, insbesondere 3,5 bis 7,0 mm.

Der Abstand h2 der Flachrohre der ersten Flachrohrreihe beträgt vorzugsweise 4 bis 12 mm, insbesondere 8 +/- 2 mm.

Der Abstand h6 der Kältespeicherelemente beträgt vorzugsweise 3 bis 8 mm, insbesondere bevorzugt 4 bis 7 mm.

Die Querteilung q des Wärmetauschers beträgt vorzugsweise 5 bis 15 mm, insbesondere 10 +/- 3 mm.

Die Höhe H1 der Kältespeichermedium-Sammelbehälter beträgt bevorzugt 3 bis 25 mm, insbesondere 3 bis 15 mm, ist jedoch vorzugsweise so klein wie möglich, um Bauraum zu sparen und den von Luft durchströmbaren Querschnitt so groß wie möglich zu hatten.

Im Folgenden wird die Erfindung anhand zweier Ausführungsbeispiele mit Varianten, teilweise unter Bezugnahme auf die Zeichnung, im Einzelnen erläutert. Es zeigen:

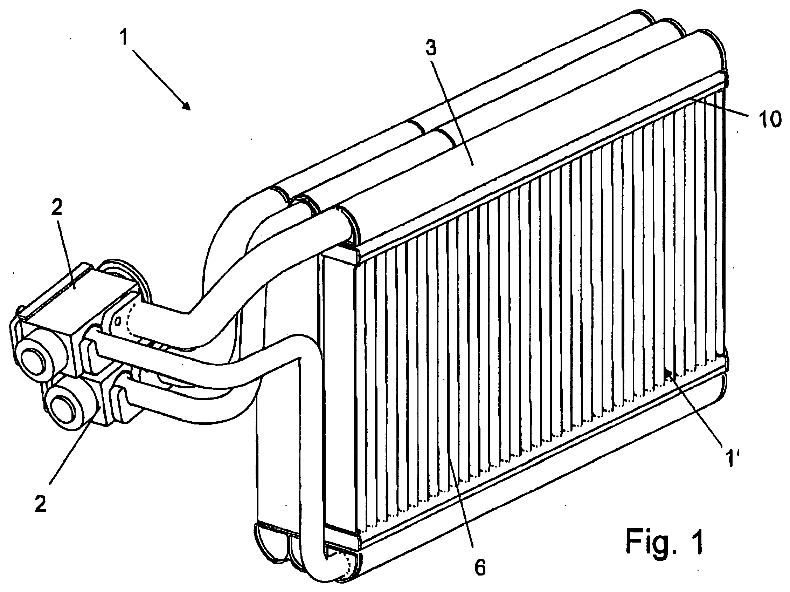

- Fig. 1: eine perspektivische Ansicht eines Wärmetauschers mit Sammler und Expansionsventilen gemäß dem ersten Ausführungsbeispiel, das nicht Teil der Erfindung ist,
- Fig. 2: eine perspektivische Ansicht des Wärmetauschers mit Sammler von Fig. 1 mit abgenommenen oberen Sammelkästen,
- Fig. 3: einen Schnitt quer durch den oberen Bereich des Sammlers,
- Fig. 4: einen Schnitt in Längsrichtung durch den oberen Bereich des Sammlers,
- Fig. 5: einen Schnitt in Längsrichtung durch den Sammler,

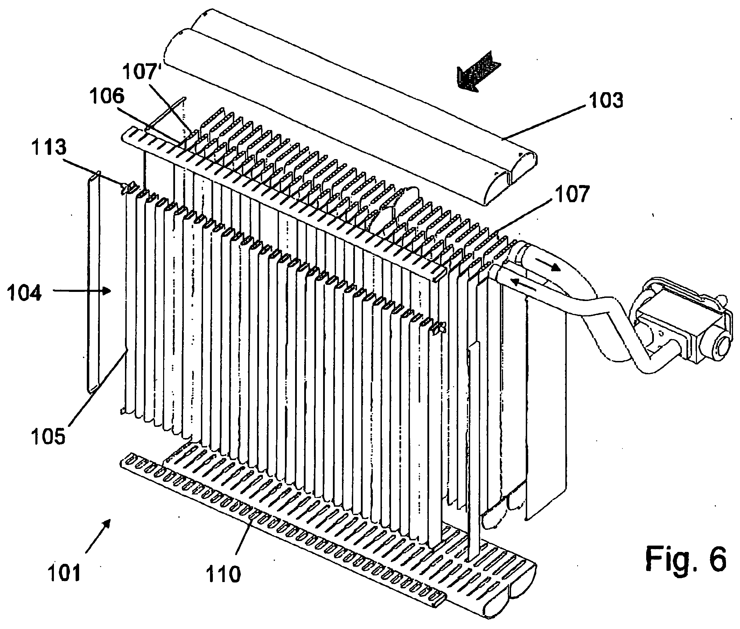

- Fig. 6: eine perspektivische Ansicht eines Wärmetauschers in Explosionsdarstellung mit Sammler und Expansionsventil gemäß dem zweiten Ausführungsbeispiel, das Teil der Erfindung ist,

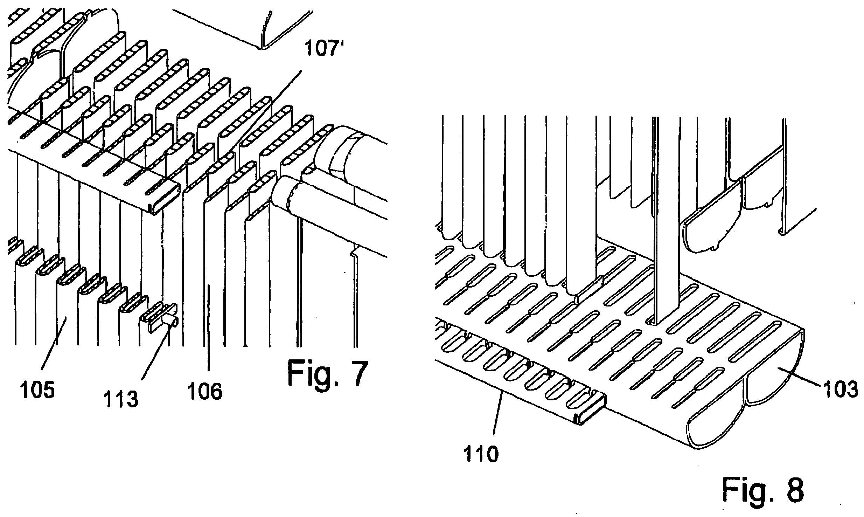

- Fig. 7: eine Detailansicht des oberen, rechten Bereichs von Fig. 6,
- Fig. 8: eine Detailansicht des unteren, rechten Bereichs von Fig. 6,

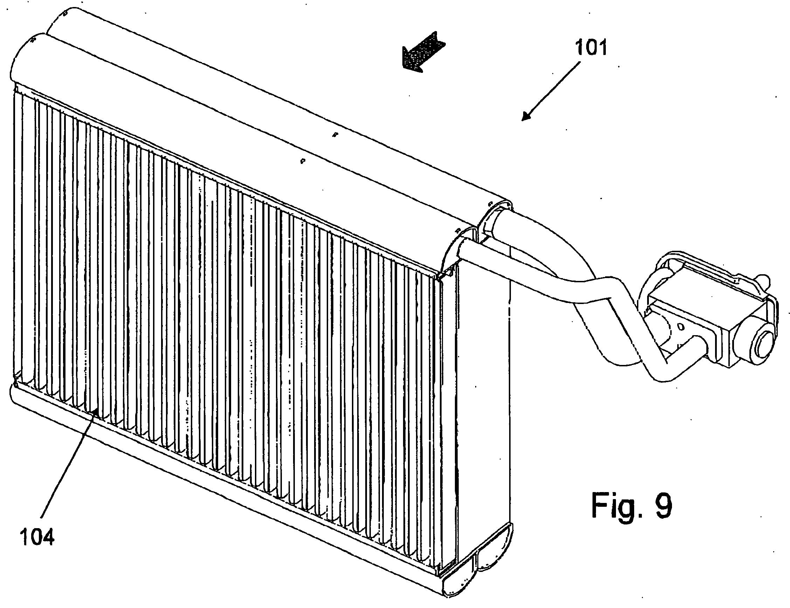

- Fig. 9: den Wärmetauscher von Fig. 6 in einer perspektivischen Ansicht,
- Fig. 10: eine Draufsicht auf eine erste Variante des zweiten Ausführungsbeispiels in Explosionsdarstellung zur Verdeutlichung des Zusammenbaus,
- Fig. 11: einen Fig. 10 entsprechenden Schnitt im Bereich der Flachrohre,
- Fig. 12: eine Detailansicht von Fig. 11,
- Fig. 13: die Detailansicht von Fig. 12 in zusammengebautem Zustand,

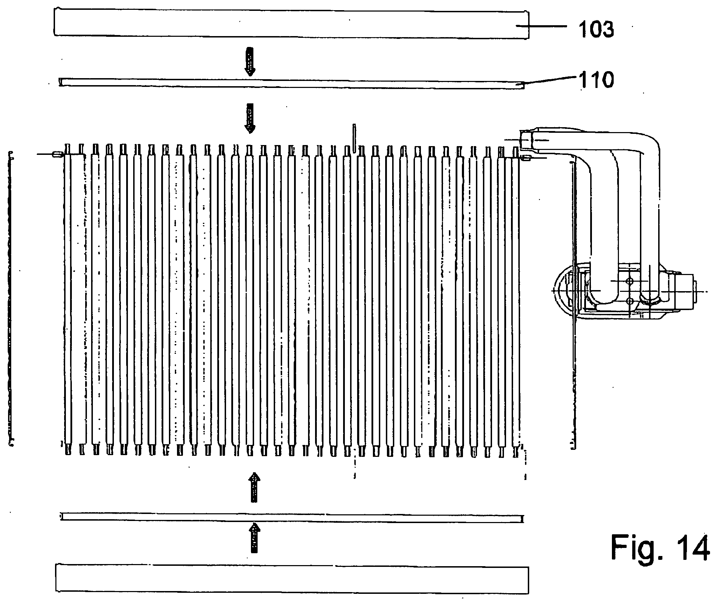

- Fig. 14: eine Explosionsdarstellung des Wärmetauschers von Fig. 10 zur Verdeutlichung des weiteren Zusammenbaus,
- Fig. 15: einen Längsschnitt durch einen Wärmetauscher gemäß dem zweiten Ausführungsbeispiel,
- Fig. 16: eine Detailansicht des linken, oberen Bereichs von Fig. 15 in nicht geschnittener Darstellung,
- Fig. 17: eine Detailansicht des rechten, oberen Bereichs von Fig. 15,
- Fig. 18: eine Detailansicht eines Schnittes quer durch den Wärmetauscher gemäß dem zweiten Ausführungsbeispiel,

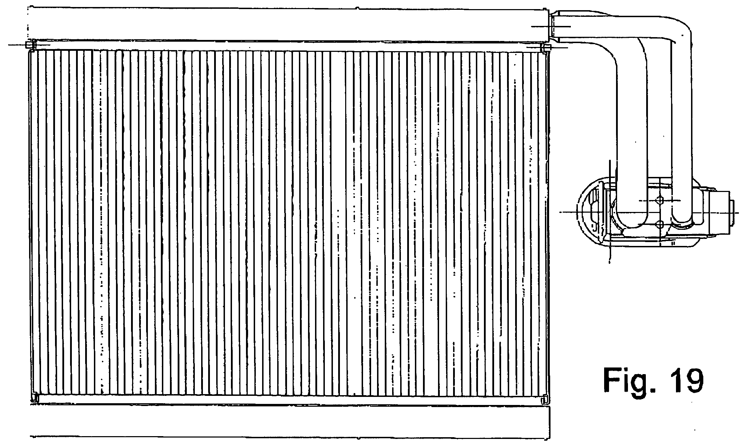

- Fig. 19: eine Seitenansicht des Wärmetauschers gemäß dem zweiten Ausführungsbeispiel,
- Fig. 20: eine perspektivische Detailansicht eines Wärmetauschers gemäß einer zweiten Variante des zweiten Ausführungsbeispiels ohne oberen Sammelkasten,
- Fig. 21: eine perspektivische Ansicht des Wärmetauschers gemäß der zweiten Variante des zweiten Ausführungsbeispiels ohne oberen und unteren Sammelkasten mit Darstellung des Strömungsverlaufs des Kältemittels durch den Wärmetauscher,

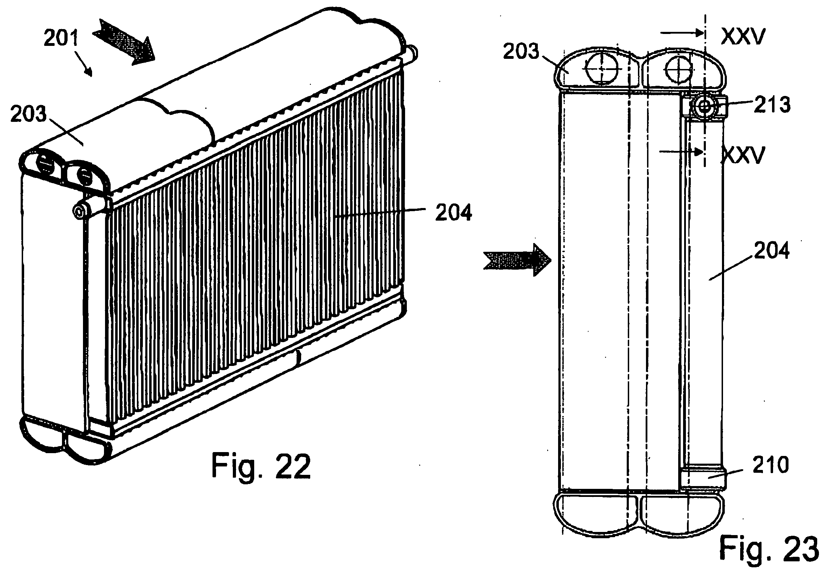

- Fig. 22: eine perspektivische Ansicht des Wärmetauschers gemäß dem dritten Ausführungsbeispiel, das nicht Teil der Erfindung ist,
- Fig. 23: einen Schnitt quer durch den Wärmetauscher von Fig. 22,
- Flg. 24: eine Detailansicht des unteren Bereichs von Fig. 23,
- Fig. 25: einen Schnitt entlang Linie XXV-XXV von Fig. 23,
- Fig. 26: einen Schnitt in Längsrichtung des Wärmetauschers von Fig. 22 im oberen Bereich,
- Fig. 27: einen Schnitt durch einen Wärmetauscher gemäß einer fünften Variante des zweiten Ausführungsbeispiels,
- Fig. 28: einen Schnitt durch einen Wärmetauscher gemäß einer sechsten Variante des zweiten Ausführungsbeispiels,
- Fig. 29: einen Schnitt durch einen Wärmetauscher gemäß einer siebten Variante des zweiten Ausführungsbeispiels, und
- Fig. 30: einen Schnitt durch einen Wärmetauscher gemäß einer achten Variante des zweiten Ausführungsbeispiels.

Das erste Ausführungsbeispiel ist nicht Teil der Erfindung.

Eine Kraftfahrzeug-Klimaanlage zum Temperieren des Kraftfahrzeug-Innenraums mit einem Kältemittel-Kreislauf, von der nur der Verdampfer 1, zwei thermostatische Expansionsventile 2 zur Regelung von Kältemitteldruck und -temperatur und ein in den Verdampfer 1 integrierter Sammler 3 dargestellt sind, weist, um auch bei einem Motorstopp zumindest über einen kurzen Zeitraum eine ausreichende Kühlleistung zur Verfügung zu stellen, einen Kältespeicher 4 auf, bestehend aus einer Mehrzahl von Kähtespeicherelementen 5, welche mit einem Kältespeichermedium gefüllt sind. Die Kältespeicherelemente 5 sind durch Bereiche speziell ausgestalteter Flachrohre 6 aus Aluminium gebildet, auf die an späterer Stelle näher eingegangen wird. Als Kältespeichermedium dient vorliegend Tetradecan. Alternativ sind insbesondere auch Penta- oder Hexadecan geeignet.

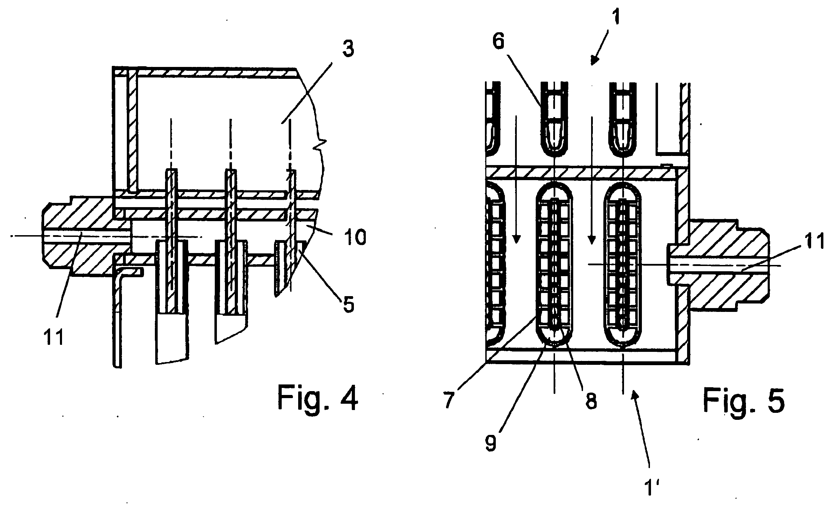

Der Verdampfer 1 weist einen im Wesentlichen herkömmlichen Aufbau mit zwei Reihen von Flachrohren 7 und dazwischen angeordneten Wellrippen (nicht dargestellt) auf. Der Kältespeicherbereich, welcher als eigenständiger zweiter Verdampfer 1' ausgebildet ist und in welchem die Kältespeicherelemente 5 vorgesehen sind, ist auf der Rückseite desselben, das heißt auf der in normaler Luftströmungsrichtung hinten liegenden Seite des Verdampfers 1, angeordnet. Die normale Luftströmungsrichtung ist in Fig. 5 durch Pfeile angedeutet. Die Kältespeicher-Flachrohre 6 im Kältespeicherbereich zwischen den beiden Sammlern 3 und die herkömmlichen Flachrohre 7 des Verdampfers 1 sind jeweils in einer Reihe angeordnet, so dass ein möglichst geringer Strömungswiderstand für die den Verdampfer 1 und den Kältespeicherbereich durchströmende Luft gegeben ist (vgl. Fig. 5).

Die Kältespeicher-Flachruhre 6 weisen einen doppelwandigen Aufbau mit einer Mehrzahl von Kältemittel-Kanälen 8 und Kältespeichermedium-Kanälen 9 auf, wobei die Kältemittel-Kanäle 8 innen angeordnet sind. Dabei sind die Käftespeicher-Flachrohre 6 derart angeoninet, dass die als Kältespeicherelemente 5 dienenden Kältespeichermedium-Kanäle 9 in einem Kältespeichermedium-Sammelbehälter 10 enden, so dass das Kältespeicherelement 5 nur einen einzigen Hohlraum aufweist, welcher - von einem Ausgleichsraum abgesehen - vollständig mit dem Kältespeichermedium gefüllt ist. Das Befüllen erfolgt über eine Öffnung 11 im Kältespeichermedium-Sammelbehälter 10 in einem einzigen Arbeitsgang. Nach dem Befüllen wird die Öffnung fest verschlossen, so dass ein unbefugtes Öffnen sicher verhindert wird.

Im Inneren des durchgehenden Hohlraums sind gemäß einer nicht in der Zeichnung dargestellten Variante Elemente vorgesehen, wie vorliegend ein Kunststoff-Vlies, die zur Verbesserung des Wärmetransports sowie zur Erhöhung der inneren Oberfläche dienen, um die Kristallbildung des Latentmediums zu beschleunigen.

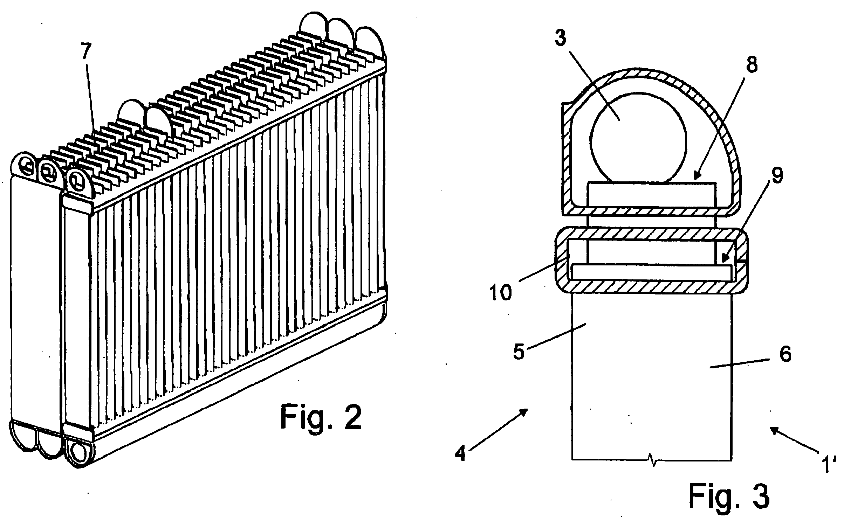

Die Kältemittel-Kanäle 8 ragen durch den Kältespeichermedium-Sammelbehälter 10 hindurch und enden beidseitig im entsprechenden Sammler 3 (vgl. Fig. 3 und 4).

Vorliegend haben der Verdampfer 1 und die Flachrohre 6, in welchen die Kältespeicherelemente 5 integriert sind, und deren Sammler 3 eigene Anschlüsse, das heißt es ist je ein Ein- und Austritt vorgesehen. Die selbsttätige Regelung der Kältemitteltemperatur und des -drucks erfolgt durch je eines der thermostatischen Expansionsventile 2, wobei auch andere Regelorgane vorgesehen sein können. Dies stellt sicher, dass im Bedarfsfall eine ausreichende Durchströmung mit Kältemittel erfolgt. Ist der Kältemittelspeicher 3 beladen, so regelt das Expansionsventil 2 selbsttätig ab, so dass der Kältemittelstrom auf ein Minimum reduziert wird, so dass dem eigentlichen Verdampfer 1 fast der gesamte Kältemittelmassenstrom zur Verfügung steht.

Gemäß einer weiteren Variante ist der in Flachrohren integrierte Kättespeicher zwischen zwei Flachrohrreihen des Verdampfers angeordnet. Ebenfalls ist eine Anordnung des Kältespeichers in normaler Luftströmungsrichtung gesehen vor dem Verdampfer möglich.

Gemäß dem zweiten Ausführungsbeispiel, das Teil der Erfindung ist, bei dem gleiche oder gleichwirkende Bauteile mit um 100 höheren Bezugszeichen versehen sind, ist ein zweireihiger Verdampfer 101 vorgesehen. Der Kältespeicher 104 ist hierbei direkt in den Verdampfer 101 integriert, so dass - im Gegensatz zum zuvor beschriebenen ersten Ausführungsbeispiel - hierbei der zweite Verdampfer 1', der zweite Sammler und das zweite Expansionsorgan 2 entfällt.

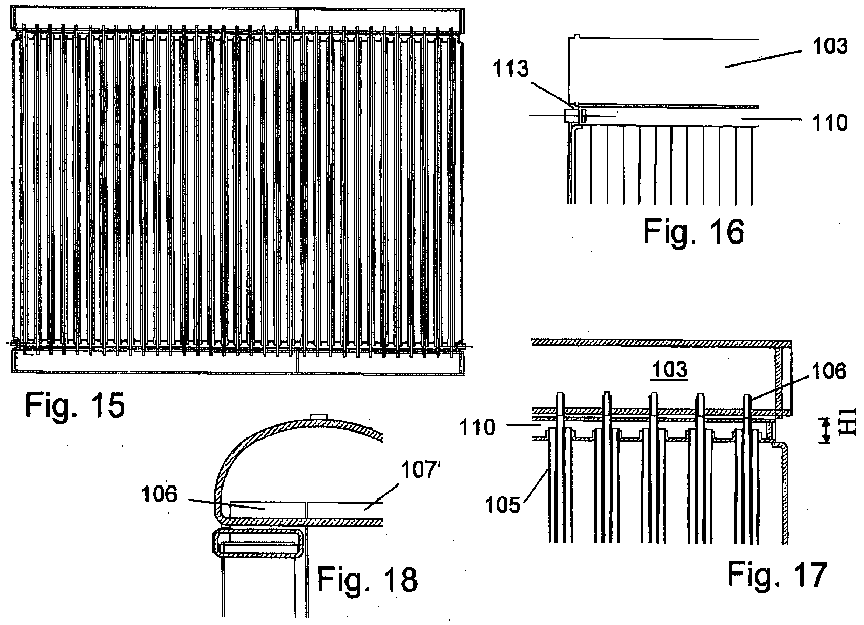

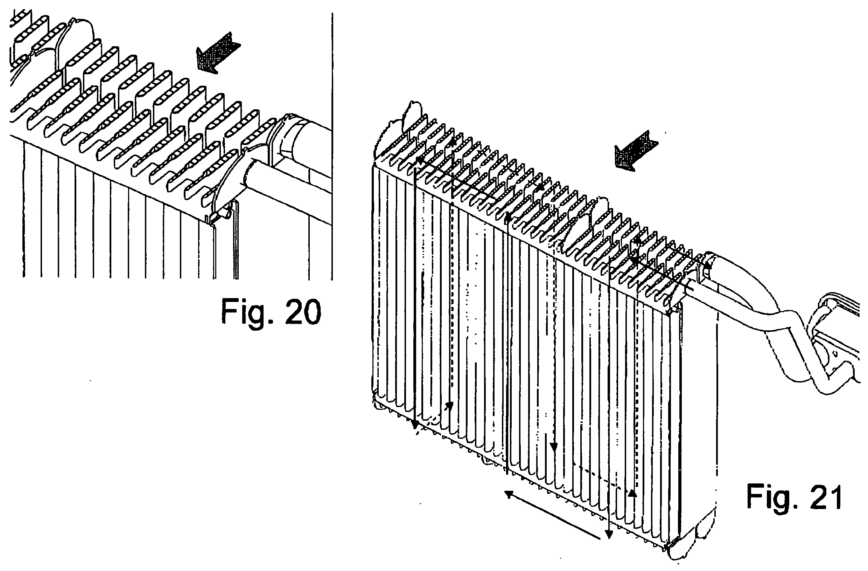

Die erste Flachrohrreihe wird durch eine Reihe herkömmlicher, mehrkammriger, extrudierter Flachrohre 107 gebildet, die mit ihren Enden jeweils in einen Sammler 103 münden (vgl. bspw. Fig. 18, rechte Seite). Der Aufbau der ersten Reihe entspricht hierbei dem herkömmlicher Wärmetauscher. Vorliegend sind in den Sammlern 103 Trennwände 112 zur Vorgabe eines Strömungswegs des Kältemittels (vorliegend R134a, jedoch kann bspw. auch CO₂ verwendet werden) durch den Wärmetauscher 101 vorgesehen, so dass der Wärmetauscher 101 im Kreuzgegenstrombetrieb mit jeweils zwei Umlenkungen in der Breite durchströmt wird (vgl. Fig. 21, wobei die Strömungsrichtung des Kältemittels in einem Wärmetauscher 101 gemäß einer an späteren Stelle näher beschriebenen zweiten Variante des zweiten Ausführungsbeispiels und die Strömungsrichtung der Luft durch Pfeile dargestellt ist). Es sind jedoch auch andere Durchströmungen möglich, wobei jedoch vorzugsweise zuerst die Seite des Wärmetauschers 101 durchströmt wird, in welcher der Kältespeicher 104 angeordnet ist. Ebenfalls können auch Wärmetauscher mit mehr als zwei Reihen vorgesehen sein, wobei hierbei der Kältespeicher 104 vorzugsweise außen an der luftabströmseitig angeordneten Reihe angeordnet Ist, die vorzugsweise zuerst vom Kältemittel durchströmt wird.

Die zweite Flachrohrreihe wird vorliegend durch jeweils zwei direkt nebeneinander angeordnete Flachrohre 107' und 106 gebildet, wobei die Flachrohre 107' luftanströmseitig angeordnet sind und eine den Flachrohren 107 der ersten Flachrohrreihe entsprechende Dicke aufweisen, jedoch im Querschnitt nur etwa halb so lang sind. Die luftabströmseitig angeordneten die Flachrohre 106 sind vorliegend nahezu ebenso lang wie die Flachrohre 107' aber deutlich dünner ausgebildet und werden auf drei Seiten von in ihrem Querschnitt U-förmig ausgebildeten Rohren (U-Rohre, vorliegend mit mehreren Kanälen) umgeben, wobei es sich um die Kältespeicherelemente 105 handelt, die in Verbindung mit oberen und unteren Kältespeichermedium-Sammelbehältern 110 den Kältespeicher 104 bilden. Die Innenabmessungen der Kältespeicherelemente 105 entsprechen hierbei den Außenabmessungen der Flachrohre 106, so dass sie dicht aneinander anliegen.

Die Kältespeicherelemente 105 sind etwas kürzer als die Flachrohre 106, 107 und 107' ausgebildet, so dass die Flachrohre 106, 107 und 107' über dieselben hinaus- und in die Sammler 103 hineinragen, während die in ihrem Querschnitt als U-förmige Rohre ausgebildeten Kältespeicherelemente 105 nur bis in die Befüllkästen ragen, im Folgenden als Kältespeichermedium-Sammelbehälter 110 bezeichnet, die unter- bzw. oberhalb der Sammler 103 luftabströmseitig im Wärmetauscher 101 angeordnet sind. Zum Befüllen des Kältespeichers 104 mit dem Kältespeichermedium, vorliegend Decanol, sind oben, seitlich an dem oberen Kältespeichermedium-Sammelbehätter 110 Befüllstutzen 113 angeordnet.

Für die Herstellung des Wärmetauschers 101 werden vorliegend alle Kornponenten zusammengesetzt und auf bekannte Weise miteinander verlötet.

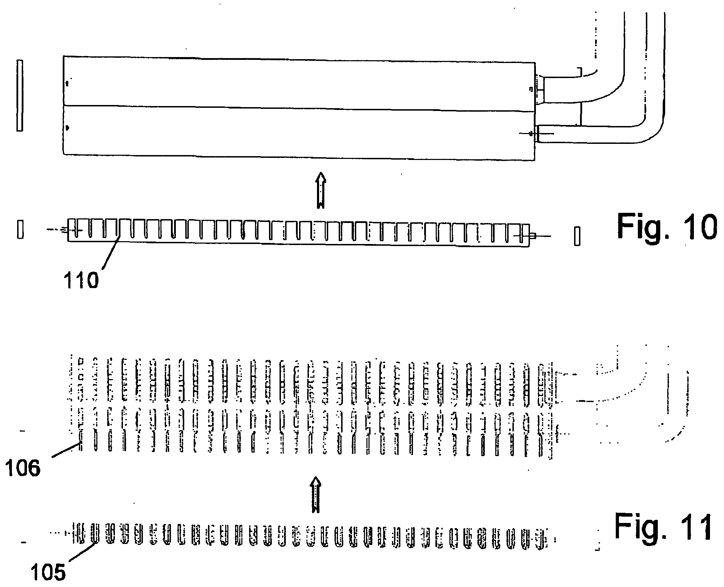

Gemäß einer ersten Variante der Herstellung (vgl. Figuren 10 und 11) erfolgt eine getrennte Vormontage von Wärmetauscher (ohne Kättespeicher) und Kättespeicher. Die beiden Baugruppen werden nach der Vormontage ineinander geschoben, wie in der Zeichnung dargestellt, und anschließend miteinander verlöten. Die beiden Baugruppen können alternativ auch getrennt verlötet und anschließend ineinander geschoben werden. Ebenfalls sind auch mechanisch gefügte Wärmetauscher möglich.

Bei den Flachrohren 106, 107, 107' sowie den die Kältespeicherelemente 105 bildenden Rohren handelt es sich gemäß dem vorliegenden Ausführungsbeispiel um extrudierte Rohre. Neben extrudierten Flachrohren sind insbesondere auch geschweißte oder aus Scheiben gefalzte Flachrohre möglich.

Gemäß dem zweiten Ausführungsbeispiel hat der Wärmetauscher 101 folgende Abmessungen (bezüglich der Maße wird auf die Figuren 12, 13 und 17 verwiesen):
Gesamttiefe B des Wärmetauschers 101: 65 mm
Breite B2 der Flachrohre 107 der ersten Flachrohrreihe: 30 mm
Dicke b2 der Flachrohre 107 der ersten Flachrohrreihe: 3 mm
Breite B3 der Flachrohre 107' der zweiten Flachrohrreihe: 15 mm
Dicke b3 der Flachrohre 107' der zweiten Flachrohrreihe: 3 mm
Breite B4 der Flachrohre 106 der zweiten Flachrohrreihe: 14 mm
Dicke b4 der Flachrohre 106 der zweiten Flachrohrreihe: 1,5 mm
Breite B6 der Kältespeicherelemente 105: 14 mm
Dicke b6 der Kältespeicherelemente 105: 5 mm
Abstand h2 der Flachrohre 107 der ersten Flachrohrreihe: 6 mm
Abstand h6 der Kältespeicherelemente 105: 4 mm
Querteilung q des Wärmetauschers 101: 10 mm
Höhe H1 der Kältespeichermedium-Sammelbehälter 110: 4 mm

Gemäß einer zweiten Variante des zweiten Ausführungsbeispiels sind an Stelle getrennt ausgebildeter Flachrohre 106 und 107' einstückig ausgebildete, vorliegend wiederum extrudierte Flachrohre mit unterschiedlichen Dicken vorgesehen. Hierbei wird - entsprechend der ersten Variante des zweiten Ausführungsbeispiels - der Kältespeicher seitlich auf den dünneren Bereich der Flachrohre aufgeschoben, wobei das Verlöten vor oder nach dem Aufschieben erfolgen kann. Vorliegend weisen die dickeren Bereiche der zweiten Flachrohrreihe eine Breite auf, welche der Breite der Flachrohre der ersten Flachrohrreihe entspricht. Der dünnere Bereich ist vorliegend etwas schmäler als der dickere Bereich ausgebildet.

Gemäß einer weiteren, nicht in der Zeichnung dargestellten dritten Variante des zweiten Ausführungsbeispiels sind an Stelle der die Sammler bildenden Sammelkästen mit jeweils U-förmigem Querschnitt aus Platten gebildete Sammler vorgesehen.

Entsprechend einer vierten Variante des zweiten Ausführungsbeispiels sind die Kältespeicherelemente unten verschlossen, so dass der untere Kältespeichermedium-Sammelbehälter entfällt, wodurch die freie Durchströmfläche des Wärmetauschers für die Luft etwas größer ist, jedoch kann es beim Befüllen zu Problemen kommen, insbesondere bei kleinen Abmessungen der das Kältespeichermedium aufnehmenden Rohre.

Gemäß dem dritten Ausführungsbeispiel das nicht Teil der Erfindung ist, bei dem gleiche oder gleichwirkende Bauteile mit um 100 oder 200 höheren Bezugszeichen bezüglich des ersten bzw. zweiten Ausführungsbeispiels versehen sind, ist ein vom Aufbau bezogen auf die Sammler 203 zweireihiger Verdampfer 201 vorgesehen, bei dem ein Kältespeicher 204 in den Verdampfer 201 baulich integriert ist. Dabei ist - entsprechend dem zweiten Ausführungsbeispiel wiederum nur ein Expansionsorgan vorgesehen.

Die zweite Flachrohrreihe wird durch Flachrohre 207', welche in ihrer Dicke den Flachrohren 207 der ersten, luftanströmseitig hiervon angeordneten Flachrohrreihe entsprechen, ihre Breite ist jedoch um ca. 50% veningert, so dass vorliegend nur vier anstelle von acht Kammern bei den entsprechenden Mehrkammer-Flachrohren vorgesehen sind.

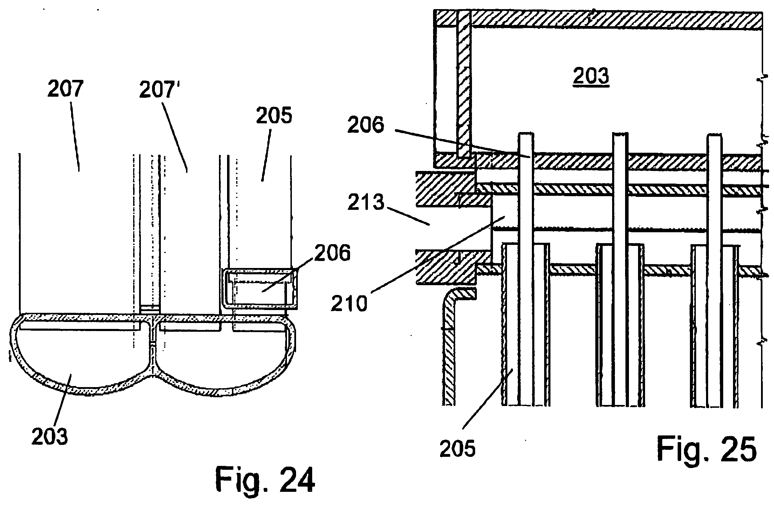

In Luftströmungsrichtung gesehen hinter den Flachrohren 207' ist der Kältespeicher 204 mit einer weiteren Reihe von Flachrohren 206 angeordnet, die in die gleichen Sammler 203 münden, wie die benachbarten Flachrohre 207'. Die Flachrohre 206 sind dünner und schmäler ausgebildet als die Flachrohre 207'. Außenseitig sind sie im Wärmeübergangsbereich von einem Kältespeicherelement 205 auf allen Seiten umgeben, wobei das Kältespeicherelement 205 ebenfalls als Flachrohr ausgebildet ist, jedoch mit einer etwas größeren Dicke und einer etwas geringeren Breite als die benachbarten Flachrohre 207'. Die die Kättespeicherelemente 205 bildenden Flachrohren enden in unterhalb bzw. oberhalb der Sammler 203 angeordneten Kältespeichermedium-Sammelbehältem 210, durch die die Flachrohre 206 hindurchragen und in den Sammlern 203 enden (vgl. Fig. 25).

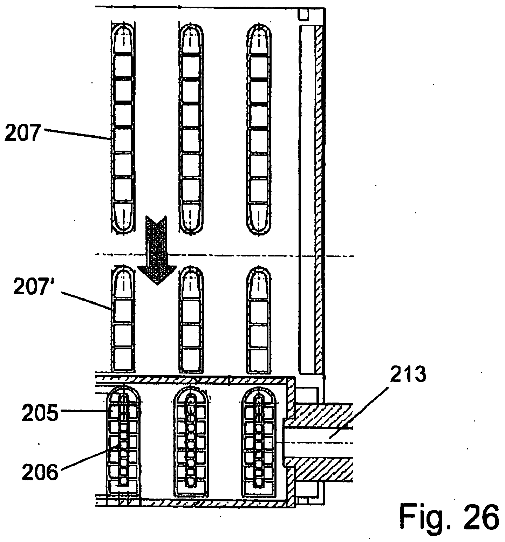

Gemäß der Darstellung von Fig. 26 sind die Flachrohre 206 und die das Kältespeicherelement 205 bildenden Flachrohren getrennt ausgebildet, wobei die Flachrohre 206 in die Flachrohre eingeschoben sind und mittels Rippen, die senkrecht zur Luftströmungsrichtung verlaufen, zentriert werden. Gemäß einer Variante kann die entsprechende Anordnung auch durch doppelwandige Rohre gebildet werden, so dass die Flachrohre 206 und die das Kältespelcherelement 205 bildenden Flachrohre einstückig miteinander ausgebildet sind. Die einstückige Ausgestaltung bietet Vorteile bei der Montage, jedoch ist das Ablängen der Flachrohre deutlich aufwändiger.

Vorliegend enden die Flachrohre 207', 206 und die das Kältespeicherelement 205 bildenden Flachrohre in Luftströmungsrichtung gesehen abgeflacht, während sie luftanströmseitig abgerundet ausgebildet sind. Dabei können die Enden der Flachrohre auch anders ausgestaltet sein, insbesondere können beide Enden abgerundet sein, wie beim ersten Ausführungsbeispiel.

Für die Herstellung des Verdampfers 201 wird der Kältespeicherbereich samt Kältespeichermedium-Sammelbehälter 210 vormontiert und als Baugruppe in den Verdampfer 201 im selben Arbeitsschritt wie die Flachrohre 207 und 207' eingebaut. Anschließend erfolgt in einem einzigen Arbeitsschritt das Verlöten des gesamten Verdampfers 201. Prinzipiell kann auch die zuvor genannte Baugruppe bereits vorverlötet werden, dies verteuert jedoch die Herstellung und ist daher nur in Sonderfällen sinnvoll, insbesondere wenn keine sichere Vorfixierung der einzelnen Bauteile der Baugruppe möglich ist, so dass die Dichtheit des Kältespeichers 204 nicht gewährleistet werden kann.

Das Befüllen des Kältespeichers 204, vorliegend mit einem PCM-Material, erfolgt nach dem Verlöten über an den oberen Kältespeichermedium-Sammelbehältern 210 seitlich vorgesehene Befüllstutzen 213, wobei vorzugsweise über einen Befüllstutzen 213 befüllt und über den anderen Befallstutzen 213 entlüftet wird.

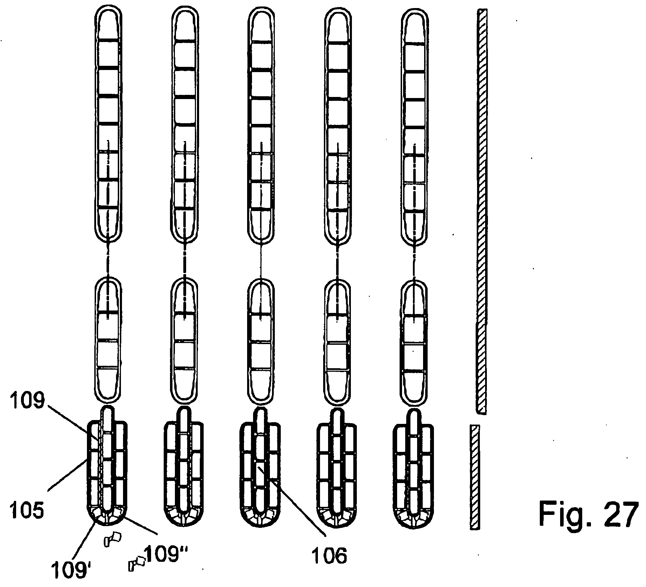

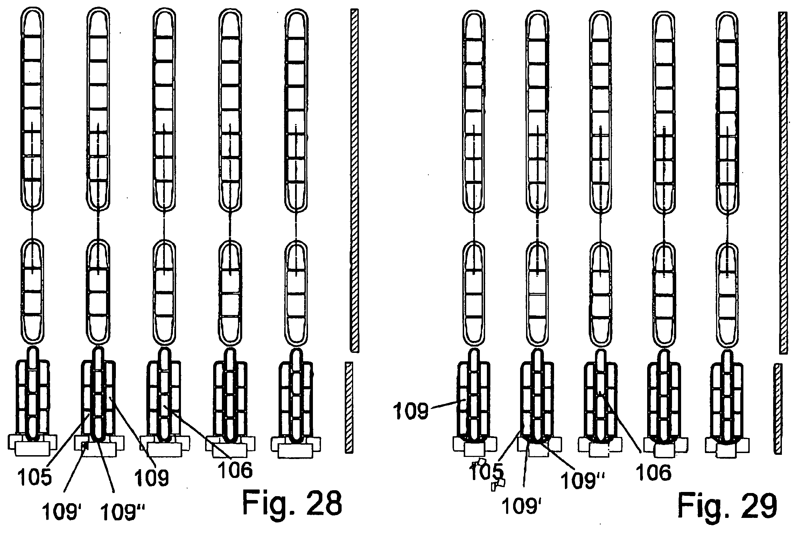

Im Folgenden erfolgt unter Bezugnahme auf die Figuren 27 bis 30 die Beschreibung der fünften bis neunten Variante des zweiten Ausführungsbeispiels. Der Aufbau des Wärmetauschers entspricht hierbei dem Wärmetauscher des zweiten Ausführungsbeispiels, jedoch unterscheiden sich jeweils die Kältespeicherelemente 105, die hierin integriert sind.

Gemäß der fünften Variante des zweiten Ausführungsbeispiels ist das Kältespeicherelement 105 derart ausgebildet, dass der mittlere Kältespeichennedium-Kanal 109' auf einer Seite, die später auf der Seite des Flachrohres 106 liegend angeordnet ist geöffnet ist Dabei ist das das Kältespeicherelement 105 bildende Flachrohr um den Bereich des geöffneten, mittleren Kanals 109' U-förmig geborgen, wobei die geschlossenen Kanäle 109 die Schenkel bilden, die voneinander beabstandet sind und zwischen sich das Flachrohr 106 aufnehmen. Das Kältespeicherelement 105 weist somit mehrere, vorliegend zwei mal drei Kanäle 109 auf, die an den Seitenflächen des Flachrohres 106 anliegen, während der geöffnete, mittlere Kanal 109' einen Verbindungssteg 109" zwischen den beiden Hälften des Kältespeicherelements 105 bildet.

Gemäß der sechsten Variante des zweiten Ausführungsbeispiels ist das Kältespeicherelement 105 derart ausgebildet, dass - bei wiederum geöffnetem mittleren Kältespeichermedium-Kanal 109'- der Verbindungssteg 109" an das Flachrohr 106 anliegend ausgebildet ist.

Bei der siebten Variante des zweiten Ausführungsbeispiels sind die Wände des mittleren Kältespeichermedium-Kanals 109' etwa mittig zusammengepresst und somit frei von Kältespeichermedium. Sie bilden gemeinsam einen Verbindungssteg 109" zwischen den beiden mit Kältespeichermedium befüllten Hälften des Kältespeicherelements 105.

Gemäß der achten Variante des zweiten Ausführungsbeispiels entfällt der Verbindungssteg vollständig zwischen den beiden Hälften des Kältespeicherelements über zumindest einen wesentlichen Bereich der Länge des Flachrohres 106. Das Kältespeicherelement 105 hierbei liegt jeweils flächig auf einander gegenüberliegenden Seitenflächen des Flachrohres 106 an.

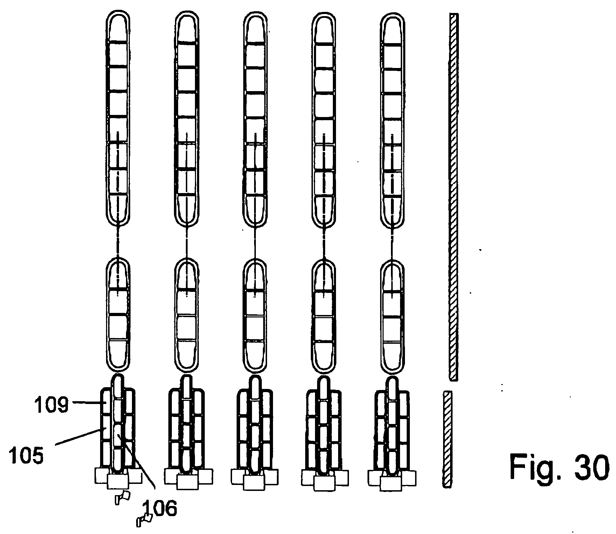

Gemäß einer neunten Variante des zweiten Ausführungsbeispiels, welche in ihrer Darstellung der Fig. 30 entspricht, entfallen die Verbindungsstege 109" vollständig, d.h. das Kältespeicherelement 105 ist zweiteilig ausgebildet, wobei die beiden getrennt ausgebildeten Hälften jeweils flächig auf einander gegenüberliegenden Seitenflächen des Flachrohres 106 anliegen.

## Patentansprüche

1. Wärmeübertrager, insbesondere Verdampfer (1'; 101; 201), insbesondere für eine Kraftfahrzeug-Klimaanlage, welcher zum Abkühlen von zu konditionierender Luft für den Kraftfahrzeug-Innenraum dient, mit einer Mehrzahl nebeneinanderliegend angeordneter, kältemittelführender Rohre und mit wenigstens einem Kältespeicher (4; 104; 204), in welchem ein Kältespeichermedium vorgesehen ist, wobei mindestens ein Kältespeicherelement (5; 105; 201) ein kältemittelführendes, im zu konditionierenden Luftstrom angeordnetes Rohr des Verdampfers (1'; 101) auf mindestens drei Seiten umgibt, und **dadurch gekennzeichnet, daß** das kältemittelführende und/oder das Kältespeichermedium enthaltende Rohr ein doppelwandiges Flachrohr (6) ist, wobei sich das Kältemittel im zentralen Bereich und das Kältespeichermedium im äußeren Bereich befindet oder das kältemittelführende und das Kältespeichermedium enthaltende Rohr durch zwei getrennt ausgebildete Rohre gebildet ist, die ineinander geschoben sind, wobei der Kältespeicher (106) ein oder mehrere kältemittelführende Rohre nicht vollständig umgreift und das Kältespeichermedium enthaltende Rohr durch ein Rohr mit U-förmigem Querschnitt gebildet ist.

2. Wärmeübertrager nach einem der vorhergehenden Ansprüche, **dadurch gekennzeichnet, dass** das kältemittelführende und das Kältespeichermedium enthaltende Rohr einstückig ausgebildet sind, insbesondere durch extrudieren.

3. Wärmeübertrager nach einem der vorhergehenden Ansprüche, **dadurch gekennzeichnet, dass** der Kältespeicher (106) ein oder mehrere kältemittelführende Rohre an genau drei Seiten umgreift.

4. Wärmeübertrager nach einem der vorhergehenden Ansprüche, **dadurch gekennzeichnet, dass** der Kältespeicher (106) ein oder mehrere kältemittelführende Rohre an zumindest einer, insbesondere an zwei Seiten nur teilweise überdeckt,

5. Wärmeübertrager nach einem der vorhergehenden Ansprüche, **dadurch gekennzeichnet, dass** das kältemittelführende Rohr in einem Sammler (3; 103; 203) endet.

6. Wärmeübertrager nach einem der vorhergehenden Ansprüche, **dadurch gekennzeichnet, dass** die kältespeichermediumführenden Rohre beziehungsweise Kanäle in einem Kältespeichermedium-Sammelbehälter (10; 110; 210) enden.

7. Wärmeübertrager nach einem der vorhergehenden Ansprüche, **dadurch gekennzeichnet, dass** wenigstens zwei Sammler (3) vorgesehen sind, wobei zumindest zwei Sammler (3) und die entsprechenden kältemittelführenden Rohre einen zweiten Verdampferteil (1') bilden und der Zwischenraum der kältemittelführenden Rohre von dem Fahrzeuginnenraum zuzuführender Luft durchströmbar ist.

8. Wärmeübertrager nach einem der vorhergehenden Ansprüche, **dadurch gekennzeichnet, dass** das oder die Kältespeicherelemente (5) mit kältemittelführendem Rohr bzw. Rohren in normaler Luftströmungsrichtung gesehen nach dem ersten Verdampferteil (1) oder nach mindestens einer Reihe kältemittelführender, nicht von einem oder mehreren Kältespeicherelementen (5) umgebenen Rohren angeordnet sind.

9. Wärmeübertrager nach Anspruch 8, **dadurch gekennzeichnet, dass** die Reihen von Flachrohren (7) oder Scheiben des Verdampfersteils (1) und die Reihe oder Reihen von Flachrohren (6) des Sammlers (3) miteinander fluchten.

10. Wärmeübertrager nach einem der vorhergehenden Ansprüche, **dadurch gekennzeichnet, dass** das oder die Kältespeicherelemente (5; 105; 205) mit kältemittelführendem Rohr bzw. Rohren mit dem Sammler (3; 103; 203) verlötet sind.

11. Wärmeübertrager nach einem der vorhergehenden Ansprüche, **dadurch gekennzeichnet, dass** der Kältespeicher (4; 104) aus Aluminium, insbesondere beschichtetem Aluminium, besteht.

12. Wärmeübertrager nach einem der vorhergehenden Ansprüche, **dadurch gekennzeichnet, dass** das Kältespeichermedium durch ein PCM-Material gebildet ist.

13. Wärmeübertrager nach einem der vorhergehenden Ansprüchen, **dadurch gekennzeichnet, dass** die Phasenumwandlungstemperatur des Kältespeichermediums in einem Bereich von 0°C bis 30°C, vorzugsweise 1°C bis 20°C, insbesondere von 2°C bis 15°C, insbesondere bevorzugt von 4°C bis 12°C, liegt.

14. Wärmeübertrager nach einem der vorhergehenden Ansprüche, **dadurch gekennzeichnet, dass** im Kältespeicher (4) mindestens eine Einlage angeordnet ist.

15. Wärmeübertrager nach Anspruch 14, **dadurch gekennzeichnet, dass** die Einlage durch ein Rippenblech, ein Vlies, ein Gestrick oder einen Schaum gebildet ist.

16. Wärmeübertrager nach einem der vorhergehenden Ansprüche, **dadurch gekennzeichnet, dass** der Verdampfer (1, 1') wenigstens zwei Teile aufweist, wobei der Kältespeicher (4) in einen eigenständigen zweiten Verdampferteil (1'), der vom gleichen Kältemittel wie der erste Verdampferteil (1) durchströmt wird, integriert ist.

17. Klimaanlage mit Kältespeicher (4; 104; 204), insbesondere für ein Kraftfahrzeug, mit einem Kältemittelkreislauf, **gekennzeichnet durch** einen Wärmeübertrager (1'; 101; 204) gemäß einem der Ansprüche 1 bis 16.

18. Klimaanlage nach Anspruch 17, **dadurch gekennzeichnet, dass** der erste Verdampferteil (1) und der zweite Verdampferteil (1') unabhängig voneinander ausgebildet sind.

19. Klimaanlage nach Anspruch 17 oder 18, **dadurch gekennzeichnet, dass** dem ersten Verdampferteil (1) und dem zweiten Verdampferteil (1') separate Expansionsventile (2) zugeordnet sind.

20. Klimaanlage nach Anspruch 17 oder 18, **dadurch gekennzeichnet, dass** dem ersten Verdampferteil (1) und dem zweiten Verdampferteil (1') ein einziges Expansionsventil (2) zugeordnet ist, wobei vorzugsweise die Verdampferteile (1, 1') und das Expansionsventil (2) in Serie geschaltet sind.

## Claims

1. A heat exchanger, particularly an evaporator (1'; 101; 201), particularly for a motor vehicle air-conditioning system which is used for cooling air to be conditioned for the passenger compartment of a motor vehicle, comprising a plurality of mutually adjacent refrigerant-conducting tubes, and at least one cold storage device (4; 104; 204) in which a cold storage medium is provided, wherein at least one cold storage element (5; 105; 201) encompasses at least three sides of a refrigerant-conducting tube of the evaporator (1'; 101), which tube is arranged in the flow of air to be conditioned, and **characterised in that** the tube that conducts the refrigerant and/or contains cold storage medium is a double-walled flat tube (6), wherein the refrigerant is located in the central region and the cold storage medium is located in the outer region or the tube that conducts refrigerant and contains cold storage medium is formed by two separately formed tubes that are inserted one inside the other, wherein the cold storage device (106) does not fully encompass one or more refrigerant-conducting tubes and the tube that contains cold storage medium is formed by a tube having a U-shaped cross-section.

2. The heat exchanger according to any one of the preceding claims, **characterised in that** the tube that conducts refrigerant and the tube that contains cold storage medium are formed as integrated pieces, particularly by way of extrusion.

3. The heat exchanger according to any one of the preceding claims, **characterised in that** the cold storage device (106) encompasses one or more refrigerant-conducting tubes on precisely three sides.

4. The heat exchanger according to any one of the preceding claims, **characterised in that** the cold storage device (106) only partially covers one or more refrigerant-conducting tubes on at least one side, particularly on two sides.

5. The heat exchanger according to any one of the preceding claims, **characterised in that** the refrigerant-conducting tube ends in a collector (3; 103; 203).

6. The heat exchanger according to any one of the preceding claims, **characterised in that** the cold storage medium-conducting tubes and/or ducts end in a cold storage medium collecting container (10; 110; 210).

7. The heat exchanger according to any one of the preceding claims, **characterised in that** at least two collectors (3) are provided, wherein at least two collectors (3) and the corresponding refrigerant-conducting tubes form a second evaporator part (1'), and air to be supplied to the passenger compartment of the vehicle can flow through the intermediate space between the refrigerant-conducting tubes.

8. The heat exchanger according to any one of the preceding claims, **characterised in that** the cold storage element or elements (5) with refrigerant-conducting tube or tubes, viewed in the normal air flow direction, are arranged downstream of the first evaporator part (1) or downstream of at least one series of refrigerant-conducting tubes that are not encompassed by one or more cold storage elements (5).

9. The heat exchanger according to claim 8, **characterised in that** the series of flat tubes (7) or plates of the evaporator part (1) and the one or more series of flat tubes (6) of the collector (3) are aligned with one another.

10. The heat exchanger according to any one of the preceding claims, **characterised in that** the one or more cold storage elements (5; 105; 205) with the refrigerant-conducting tube or tubes are soldered with the collector (3; 103; 203).

11. The heat exchanger according to any one of the preceding claims, **characterised in that** the cold storage device (4; 104) consists of aluminium, particularly coated aluminium.

12. The heat exchanger according to any one of the preceding claims, **characterised in that** the cold storage medium is formed by a PCM material.

13. The heat exchanger according to any one of the preceding claims, **characterised in that** the phase transformation temperature of the cold storage medium is in a range from 0°C to 30°C, preferably 1°C to 20°C, particularly from 2°C to 15°C, particularly preferred from 4°C to 12°C.

14. The heat exchanger according to any one of the preceding claims, **characterised in that** at least one insert is arranged in the cold storage device (4).

15. The heat exchanger according to claim 14, **characterised in that** the insert is formed by a ribbed plate, a non-woven material, a knitted fabric or a foam.

16. The heat exchanger according to any one of the preceding claims, **characterised in that** the evaporator (1, 1') has at least two parts, wherein the cold storage device (4) is integrated in a separate second evaporator part (1') through which the same refrigerant flows as through the first evaporator part (1).

17. An air-conditioning system with a cold storage device (4; 104; 204), particularly for a motor vehicle, having a refrigerant circuit, **characterised by** a heat exchanger (1'; 101; 204) according to one of claims 1 to 16.

18. The air-conditioning system according to claim 17, **characterised in that** the first evaporator part (1) and the second evaporator part (1') are formed independently of one another.

19. The air-conditioning system according to claim 17 or 18, **characterised in that** separate expansion valves (2) are assigned to the first evaporator part (1) and the second evaporator part (1').

20. The air-conditioning system according to claim 17 or 18, **characterised in that** one single expansion valve (2) is assigned to the first evaporator part (1) and the second evaporator part (1'), wherein preferably the evaporator parts (1, 1') and the expansion valve (2) are connected in series.

## Revendications

1. Echangeur de chaleur, en particulier évaporateur (1' ; 101 ; 201), en particulier pour un système de climatisation d'un véhicule automobile, échangeur de chaleur qui sert au refroidissement d'air à conditionner pour l'habitacle d'un véhicule automobile, comprenant une pluralité de tubes guidant le fluide frigorigène et disposés en étant placés les uns à côté des autres, et comprenant au moins un accumulateur de froid (4 ; 104 ; 204) dans lequel il est prévu un milieu contenu dans l'accumulateur de froid, où au moins un élément (5 ; 105 ; 201) de l'accumulateur de froid entoure, sur au moins trois côtés, un tube de l'évaporateur (1' ; 101), tube guidant le fluide frigorigène et disposé dans le flux d'air à conditionner, et **caractérisé en ce que** le tube guidant le fluide frigorigène et / ou contenant le milieu contenu dans l'accumulateur de froid est un tube plat (6) à double paroi, où le fluide frigorigène se trouve dans la zone centrale, le milieu contenu dans l'accumulateur de froid se trouvant dans la zone extérieure, ou bien le tube guidant le fluide frigorigène et contenant le milieu contenu dans l'accumulateur de froid est formé par deux tubes configurés de façon séparée, lesquels tubes sont emboîtés l'un dans l'autre, où l'accumulateur de froid (106) n'enveloppe pas complètement un ou plusieurs tubes guidant le fluide frigorigène, et le tube contenant le milieu contenu dans l'accumulateur de froid est formé par un tube ayant une section en forme de U.

2. Echangeur de chaleur selon l'une ou l'autre des revendications précédentes, **caractérisé en ce que** le tube guidant le fluide frigorigène et le tube contenant le milieu contenu dans l'accumulateur de froid sont configurés en formant un seul et même élément, réalisé en particulier par extrusion.

3. Echangeur de chaleur selon l'une ou l'autre des revendications précédentes, **caractérisé en ce que** l'accumulateur de froid (106) enveloppe, sur précisément trois côtés, un ou plusieurs tubes guidant le fluide frigorigène.

4. Echangeur de chaleur selon l'une quelconque des revendications précédentes, **caractérisé en ce que** l'accumulateur de froid (106), sur au moins un côté, en particulier sur deux côtés, ne recouvre que partiellement un ou plusieurs tubes guidant le fluide frigorigène.

5. Echangeur de chaleur selon l'une quelconque des revendications précédentes, **caractérisé en ce que** le tube guidant le fluide frigorigène se termine dans un collecteur (3 ; 103 ; 203).

6. Echangeur de chaleur selon l'une quelconque des revendications précédentes, **caractérisé en ce que** les tubes ou conduits guidant le milieu contenu dans l'accumulateur de froid se terminent dans un bac collecteur (10 ; 110 ; 210) du milieu contenu dans l'accumulateur de froid.

7. Echangeur de chaleur selon l'une quelconque des revendications précédentes, **caractérisé en ce qu'**il est prévu au moins deux collecteurs (3), où au moins deux collecteurs (3) et les tubes correspondants guidant le fluide frigorigène forment une deuxième partie (1') de l'évaporateur, et l'espace intermédiaire des tubes guidant le fluide frigorigène peut être traversé par de l'air à fournir à l'habitacle du véhicule.

8. Echangeur de chaleur selon l'une quelconque des revendications précédentes, **caractérisé en ce que** l'élément ou les éléments (5) de l'accumulateur de froid, comportant un tube ou des tubes guidant le fluide frigorigène, est ou sont disposé(s), en regardant dans la direction normale d'écoulement de l'air, en aval de la première partie (1) de l'évaporateur ou en aval d'au moins une rangée de tubes guidant le fluide frigorigène et non entourés par un ou plusieurs éléments (5) de l'accumulateur de froid.

9. Echangeur de chaleur selon la revendication 8, **caractérisé en ce que** les rangées de tubes plats (7) ou de plaques de la partie (1) de l'évaporateur et la rangée ou les rangées de tubes plats (6) du collecteur (3) sont alignées les unes par rapport aux autres.

10. Echangeur de chaleur selon l'une quelconque des revendications précédentes, **caractérisé en ce que** l'élément ou les éléments (5 ; 105 ; 205) de l'accumulateur de froid comprenant un tube ou des tubes guidant le fluide frigorigène est ou sont assemblé(s) par brasage avec le collecteur (3 ; 103 ; 203).

11. Echangeur de chaleur selon l'une quelconque des revendications précédentes, **caractérisé en ce que** l'accumulateur de froid (4 ; 104) est en aluminium, en particulier en aluminium recouvert.

12. Echangeur de chaleur selon l'une quelconque des revendications précédentes, **caractérisé en ce que** le milieu contenu dans l'accumulateur de froid est formé par un matériau - PCM - à changement de phase.

13. Echangeur de chaleur selon l'une quelconque des revendications précédentes, **caractérisé en ce que** la température de changement de phase du milieu contenu dans l'accumulateur de froid se situe dans une plage comprise entre 0°C et 30°C, de préférence entre 1°C et 20°C, en particulier entre 2°C et 15°C, en particulier de préférence entre 4°C et 12°C.

14. Echangeur de chaleur selon l'une quelconque des revendications précédentes, **caractérisé en ce qu'**au moins une garniture est disposée dans l'accumulateur de froid (4).

15. Echangeur de chaleur selon la revendication 14, **caractérisé en ce que** la garniture est formée par une tôle nervurée, un tissu non tissé, un tricot ou par une mousse.

16. Echangeur de chaleur selon l'une quelconque des revendications précédentes, **caractérisé en ce que** l'évaporateur (1, 1') présente au moins deux parties, où l'accumulateur de froid (4) est intégré dans une deuxième partie indépendante (1') de l'évaporateur, deuxième partie qui est traversée par le même fluide frigorigène que la première partie (1) de l'évaporateur.

17. Système de climatisation comprenant un accumulateur de froid (4 ; 104 ; 204), en particulier pour un véhicule automobile, ledit accumulateur de froid comprenant un circuit de fluide frigorigène, **caractérisé par** un échangeur de chaleur (1' ; 101 ; 204) selon l'une quelconque des revendications 1 à 16.

18. Système de climatisation selon la revendication 17, **caractérisé en ce que** la première partie (1) de l'évaporateur et la deuxième partie (1') de l'évaporateur sont conçues en étant indépendantes l'une de l'autre.

19. Système de climatisation selon la revendication 17 ou 18, **caractérisé en ce que** des détendeurs distincts (2) sont associés à la première partie (1) de l'évaporateur et à la deuxième partie (1') de l'évaporateur.

20. Système de climatisation selon la revendication 17 ou 18, **caractérisé en ce qu'**un détendeur unique (2) est associé à la première partie (1) de l'évaporateur et à la deuxième partie (1') de l'évaporateur, où les parties (1, 1') de l'évaporateur et le détendeur (2) sont de préférence montés en série.
